(19) Europäisches Patentamt / European Patent Office / Office européen des brevets

(11) **EP 2 882 164 A1**

(12) **EUROPEAN PATENT APPLICATION**
published in accordance with Art. 153(4) EPC

(43) Date of publication:
**10.06.2015 Bulletin 2015/24**

(21) Application number: **13827589.6**

(22) Date of filing: **06.08.2013**

(51) Int Cl.:
**H04L 29/08** (2006.01)       **H04L 1/00** (2006.01)

(86) International application number:
**PCT/JP2013/071206**

(87) International publication number:
**WO 2014/024860 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.08.2012 JP 2012173727**

(71) Applicant: **NEC Corporation**
**Tokyo 108-8001 (JP)**

(72) Inventor: **OZAWA, Kazunori**
**Tokyo 108-8001 (JP)**

(74) Representative: **Betten & Resch**
**Theatinerstrasse 8**
**80333 München (DE)**

(54) **COMMUNICATION SYSTEM, SERVER APPARATUS, SERVER APPARATUS CONTROLLING METHOD AND PROGRAM**

(57)     A communication system includes: a terminal apparatus including a display unit; and a server apparatus receiving an operation of the terminal apparatus via a network and transmitting screen information to be displayed on the display unit of the terminal apparatus via the network. The server apparatus includes: virtual client unit performing processing on the basis of an operation of the terminal apparatus and generating the screen information; an image encoder unit compressing the screen information on the basis of a predetermined method; and a band estimate calculation unit calculating a band estimate, which is an estimate of a band in the network. The band estimate calculation unit calculates a bit rate used when the image encoder unit compresses the screen information on the basis of the band estimate.

FIG.1

**Description**

[Technical Field]

[REFERENCE TO RELATED APPLICATION]

The present invention is based upon and claims the benefit of the priority of Japanese patent application No. 2012-173727, filed on August 6, 2012, the disclosure of which is incorporated herein in its entirety by reference thereto.
The present invention relates to a communication system, a server apparatus, a server apparatus control method, and a program. In particular, it relates to: a communication system in which a server is accessed via a mobile network and a virtual client on the server is remotely operated; a server apparatus; a server apparatus control method; and a program.

[Background]

In recent years, more and more companies and the like have adopted thin client systems. In a thin client system, a virtual client on a server is operated by a terminal that does not have a storage medium such as a hard disk as if an actual terminal was operated and screen information is generated on the virtual terminal. The generated screen information is transmitted to the terminal. The terminal receives and displays the screen information.
Thus, since information is not stored in the terminal in such a thin client system, a high level of security can be ensured. Namely, since no data is stored in the terminal, even if the terminal is lost, important information such as secret information is not leaked.
Patent Literature 1 discloses a communication system in which line quality and the like are considered on the basis of data transmission delay time and the like and parameters used for transmitting stream data are determined.

[CITATION LIST]

[PATENT LITERATURE]

[Patent Literature 1]

International Publication No. 2006/054442

[Summary]

[Technical Problem]

The disclosure of Patent Literature 1 is incorporated herein by reference thereto. The following analysis has been given by the present inventors.
As described above, to ensure robust security, more and more companies are adopting thin client systems. In addition, not only thin client systems using fixed networks, but also thin client systems using mobile networks are beginning to spread.
In a thin client system that functions via a mobile network such as a mobile packet network or an LTE/EPC (Long Term Evolution/Evolved Packet Core) network, a bandwidth in the mobile network changes over time depending on the distance or the traffic amount between a terminal and a base station, for example. Due to such temporal change of the bandwidth in the mobile network, accumulation or loss of packets is caused in the mobile network. As a result, since the terminal takes more time to receive information, updating of a screen displayed on the terminal is delayed or the screen is stopped or disturbed, for example. Namely, QoE (Quality of Experience), which is an index that represents user perception quality, is deteriorated.
Therefore, there are demanded a communication system, a server apparatus, a server apparatus control method, and a program, the communication system providing a thin client system via a mobile network and contributing to improving user perception quality.
In the communication system disclosed in Patent Literature 1, when measuring line quality, statistical data calculated by a receiving apparatus is transmitted to a transmitting apparatus and parameters such as an encoding rate are determined on the basis of the statistical data. Thus, the receiving apparatus needs to perform processing for calculating the statistical data (for example, for calculating one-way delay time, a packet loss ratio, etc.). However, in many cases, it is difficult for a receiving apparatus in a thin client system to perform such processing. This is because it is desirable that the hardware configuration of a receiving apparatus in a thin client system be as simple as possible. In addition, there is a problem that the statistical data transmitted from a receiving apparatus to a transmitting apparatus compresses the uplink band.

[Solution to Problem]

According to a first aspect of the present invention, there is provided a communication system, including: a terminal apparatus that includes a display unit; and a server apparatus that receives an operation of the terminal apparatus via a network and transmit screen information to be displayed on the display unit via the network; wherein the server apparatus includes: a virtual client unit that performs processing on the basis of an operation of the terminal apparatus and generate the screen information; an image encoder unit that compresses the screen information on the basis of a predetermined method; and a band estimate calculation unit that calculates a band estimate, which is an estimate of a band in the network; and wherein the band estimate calculation unit calculates a bit rate used when the image encoder unit compresses the screen information on the basis of the band estimate.

According to a second aspect of the present invention, there is provided a server apparatus, including: a virtual client unit that performs processing on the basis of an operation of a terminal apparatus connected via a network and generate screen information to be displayed by the terminal apparatus; an image encoder unit that compresses the screen information on the basis of a predetermined method; and a band estimate calculation unit that calculates an band estimate, which is an estimate of a band in the network; and wherein the band estimate calculation unit calculates a bit rate used when the image encoder unit compresses the screen information on the basis of the band estimate.

According to a third aspect of the present invention, there is provided a server apparatus control method, including: a virtual client step of performing processing on the basis of an operation of a terminal apparatus connected via a network and generating screen information to be displayed by the terminal apparatus; an image encoding step of compressing the screen information on the basis of a predetermined method; a band estimate calculation step of calculating a band estimate, which is an estimate of a band in the network; and a step of calculating a bit rate used when the screen information is compressed on the basis of the band estimate. This method is associated with a certain machine, namely, with a server apparatus connected to a terminal apparatus via a network.

According to a fourth aspect of the present invention, there is provided a program, causing a computer controlling a server apparatus to execute: virtual client processing for performing processing on the basis of an operation of a terminal apparatus connected via a network and generating screen information to be displayed by the terminal apparatus; image encoding processing for compressing the screen information on the basis of a predetermined method; band estimate calculation processing for calculating a band estimate, which is an estimate of a band in the network; and processing for calculating a bit rate used when the screen information is compressed on the basis of the band estimate. This program can be recorded in a computer-readable

(non-transient) storage medium. The storage medium may be a non-transient storage medium such as a semiconductor memory, a hard disk, a magnetic recording medium, or an optical recording medium. The present invention can be embodied as a computer program product.

[Advantageous Effects of Invention]

According to the aspects of the present invention, there are provided a communication system, a server apparatus, a server apparatus control method, and a program, the communication system providing a thin client system via a mobile network and contributing to improving user perception quality.

[Brief Description of Drawings]

[Fig. 1]

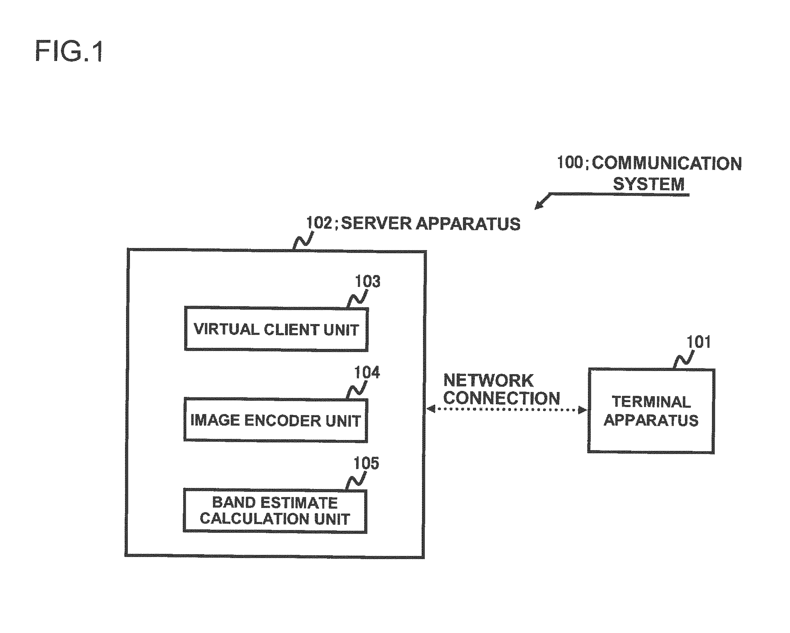

Fig. 1 illustrates an outline of an exemplary embodiment.
[Fig. 2]

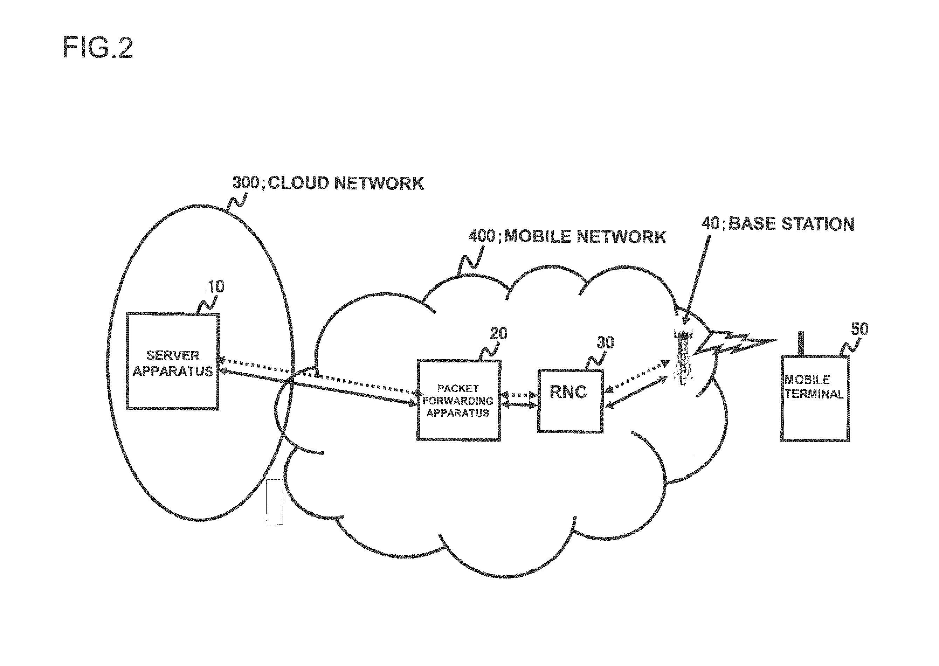

Fig. 2 illustrates a configuration of a communication system according to a first exemplary embodiment.
[Fig. 3]

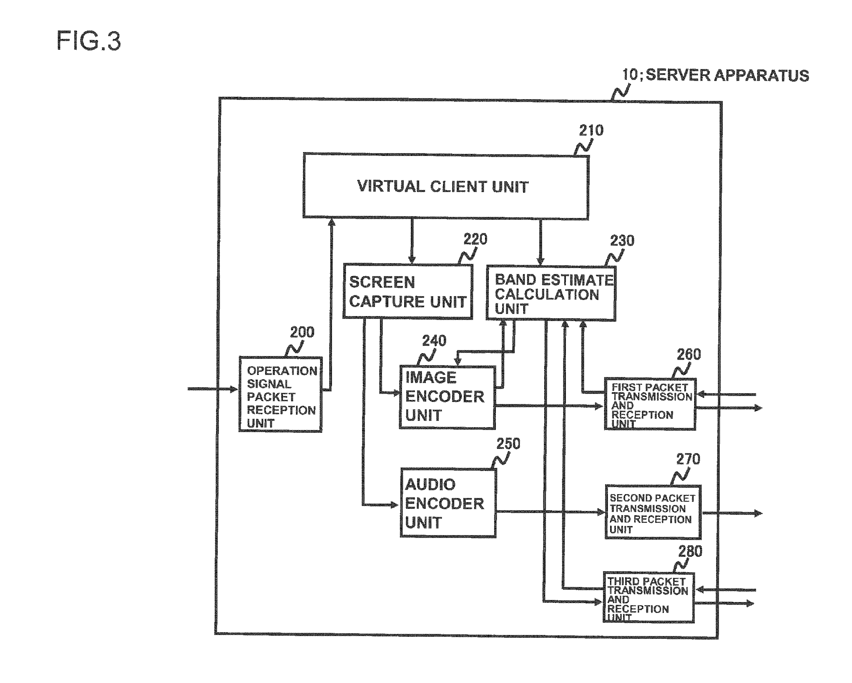

Fig. 3 illustrates an internal configuration of a server apparatus 10.
[Fig. 4]

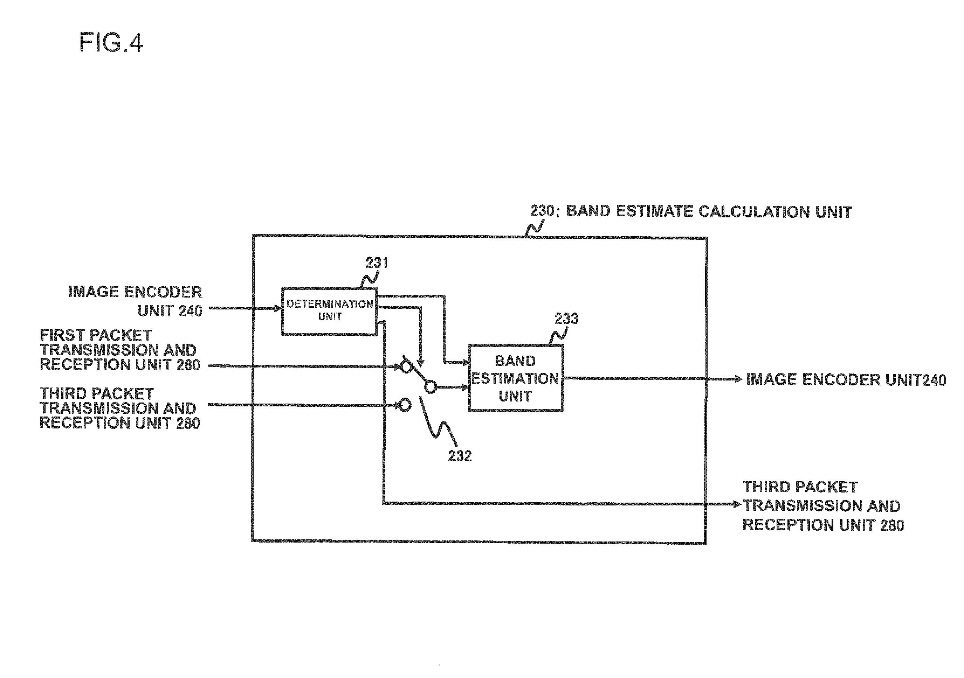

Fig. 4 illustrates an internal configuration of a band estimate calculation unit 230.
[Fig. 5]

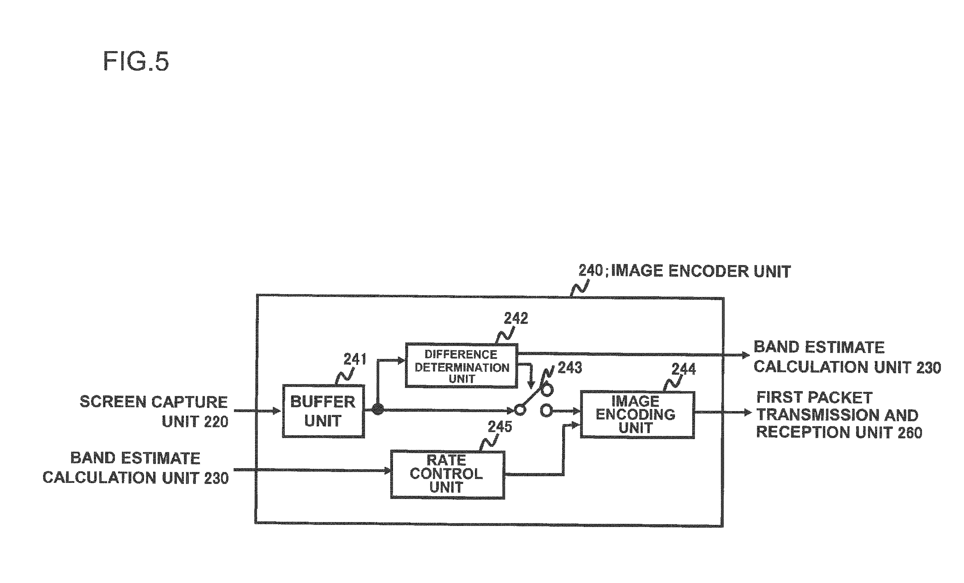

Fig. 5 illustrates an internal configuration of an image encoder unit 240.
[Fig. 6]

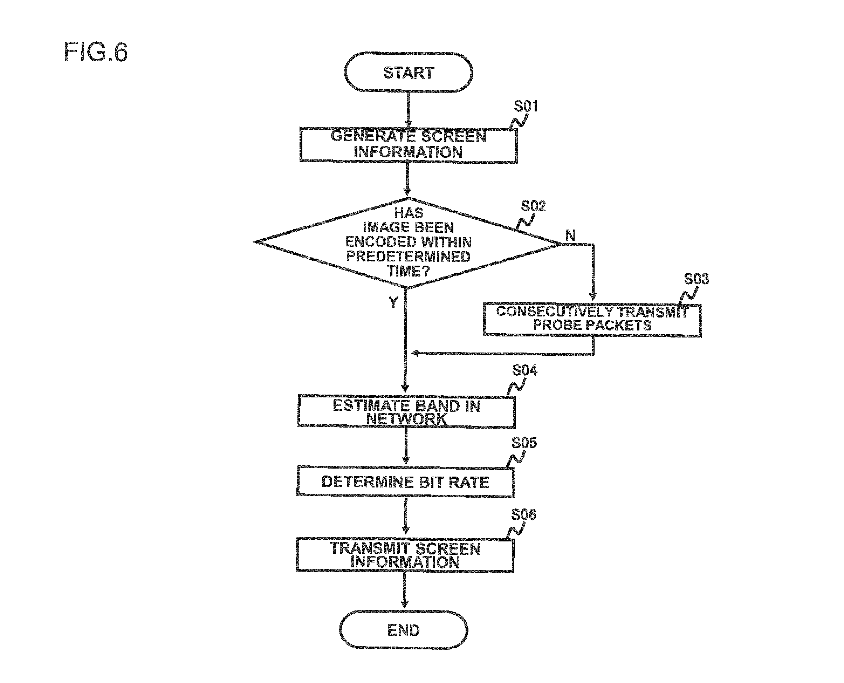

Fig. 6 is a flowchart illustrating an operation of the server apparatus 10.

[Description of Embodiments]

First, an outline of an exemplary embodiment will be described with reference to Fig. 1. In the following outline, various components are denoted by reference characters for the sake of convenience. Namely, the following reference characters are merely used as examples to facilitate understanding of the present invention. The description of the outline is not intended to place any limitations on the present invention.

As described above, there is demanded a communication system that provides a thin client system via a mobile network and that improves user perception quality.

To meet such demand, for example, a communication system 100 illustrated in Fig. 1 is provided. The communication system 100 comprises: a terminal apparatus 101 including a display unit; and a server apparatus 102 receiving an operation of the terminal apparatus 101 via a network and transmit screen information to be displayed on the display unit of the terminal apparatus 101 via the network. The server apparatus 102 includes: a virtual client unit 103 performing processing on the basis of an operation of the terminal apparatus 101 and generate the screen information; an image encoder unit 104 compressing the screen information on the basis of a predetermined method; and a band estimate calculation unit 105 calculating a band estimate, which is an estimate of a band in the network. The band estimate calculation unit 105 calculates a bit rate used when the image encoder unit 104 compresses the screen information on the basis of the band estimate.

In the communication system 100, the terminal apparatus 101 and the server apparatus 102 establish a thin client system. In addition, the bit rate used for compressing the screen information transmitted from the server apparatus 102 is changed on the basis of the band in the network. Thus, even if the network band changes over time, the bit rate can be controlled so as to follow the change. As a result, since accumulation or loss of packets is not caused in the network, for example, delay in updating of the screen on the terminal apparatus 101 can be suppressed or disturbance on the screen can be suppressed. As a result, deterioration in QoE can be suppressed. Namely, the communication system 100 improves user perception quality.

In addition, the following modes are possible.

[Mode 1]

Mode 1 corresponds to the communication system according to the above first aspect.

[Mode 2]

It is preferable that the band estimate calculation unit calculate the band estimate on the basis of information transmitted from the terminal apparatus in response to the transmission of the screen information.

[Mode 3]

It is preferable that, if the screen information has not been transmitted to the terminal apparatus for a predetermined time or more, the band estimate calculation unit calculate the band estimate on the basis of information transmitted from the terminal apparatus in response to information transmitted to the terminal apparatus.

[Mode 4]

It is preferable that the server apparatus further includes a packet transmission and reception unit which consecutively transmits certain packets to the terminal apparatus on the basis of an instruction from the band estimate calculation unit and output packets transmitted from the terminal apparatus in response to the consecutively transmitted certain packets to the band estimate calculation unit.

[Mode 5]

It is preferable that the band estimate calculation unit calculate the band estimate on the basis of a size of a packet transmitted to the terminal apparatus and time at which the terminal apparatus receives the packet transmitted to the terminal apparatus.

[Mode 6]

It is preferable that the band estimate calculation unit set the bit rate to be equal to or less than the band estimate.

[Mode 7]

It is preferable that the virtual client unit generate the screen information to which voice information is attached and that the server apparatus include: a screen capture unit separating the voice information from the screen information; and an audio encoder unit compressing the voice information.

[Mode 8]

Mode 8 corresponds to the server apparatus according to the above second aspect.

[Mode 9]

It is preferable that the band estimate calculation unit calculate the band estimate on the basis of information transmitted from the terminal apparatus in response to the transmission of the screen information.

[Mode 10]

It is preferable that, if the screen information has not been transmitted to the terminal apparatus for a predetermined time or more, the band estimate calculation unit calculate the band estimate on the basis of information transmitted from the terminal apparatus in response to information transmitted to the terminal apparatus.

[Mode 11]

It is preferable that the server apparatus further include a packet transmission and reception unit consecutively transmitting certain packets to the terminal apparatus on the basis of an instruction from the band estimate calculation unit and output packets transmitted from the terminal apparatus in response to the consecutively transmitted certain packets to the band estimate calculation unit.

[Mode 12]

It is preferable that the band estimate calculation unit calculate the band estimate on the basis of a size of a packet transmitted to the terminal apparatus and time at which the terminal apparatus receives the packet transmitted to the terminal apparatus.

[Mode 13]

It is preferable that the band estimate calculation unit set the bit rate to be equal to or less than the band estimate.

[Mode 14]

It is preferable that the virtual client unit generate the screen information to which voice information is attached and that the server apparatus include: a screen capture unit separating the voice information from the screen information; and an audio encoder unit compressing the voice information.

[Mode 15]

Mode 15 corresponds to the server apparatus control method according to the above third aspect.

[Mode 16]

It is preferable that, in the band estimate calculation step, the band estimate be calculated on the basis of information transmitted from the terminal apparatus in response to the transmission of the screen information.

[Mode 17]

It is preferable that, if the screen information has not been transmitted to the terminal apparatus for a predetermined time or more, in the band estimate calculation step, the band estimate be calculated on the basis of information transmitted from the terminal apparatus in response to information transmitted to the terminal apparatus.

[Mode 18]

It is preferable that the server apparatus control method further include a step of consecutively transmitting certain packets to the terminal apparatus on the basis of an instruction from the band estimate calculation step and a step of receiving packets transmitted from the terminal apparatus in response to the consecutively transmitted certain packets.

[Mode 19]

It is preferable that, in the band estimate calculation step, the band estimate be calculated on the basis of a size of a packet transmitted to the terminal apparatus and time at which the terminal apparatus receives the packet transmitted to the terminal apparatus.

[Mode 20]

It is preferable that, in the bit rate calculation step, the bit rate be set to be equal to or less than the band estimate.

[Mode 21]

It is preferable that the virtual client step include a step of generating the screen information to which voice information is attached, a step of separating the voice information from the screen information, and an audio encoding step of compressing the voice information.

[Mode 22]

Mode 22 corresponds to the program according to the above fourth aspect.

[Mode 23]

It is preferable that, in the band estimate calculation processing, the band estimate be calculated on the basis of information transmitted from the terminal apparatus in response to the transmission of the screen information.

[Mode 24]

It is preferable that, if the screen information has not been transmitted to the terminal apparatus for a predetermined time or more, in the band estimate calculation processing, the band estimate be calculated on the basis of information transmitted from the terminal apparatus in response to information transmitted to the terminal apparatus.

[Mode 25]

It is preferable that the computer execute processing for consecutively transmitting certain packets to the terminal apparatus on the basis of an instruction from the band estimate calculation step and processing for receiving packets transmitted from the terminal apparatus in response to the consecutively transmitted certain packets.

[Mode 26]

It is preferable that, in the band estimate calculation processing, the band estimate be calculated on the basis of a size of a packet transmitted to the terminal apparatus and time at which the terminal apparatus receives the packet transmitted to the terminal apparatus.

[Mode 27]

It is preferable that, in the bit rate calculation processing, the bit rate be set to be equal to or less than the band estimate.

[Mode 28]

It is preferable that, in the virtual client processing, the screen information to which voice information is attached be generated and the computer execute processing for separating the voice information from the screen information and audio encoding processing for compressing the voice information.

Hereinafter, a specific exemplary embodiment will be described in detail with reference to the drawings.

[First exemplary embodiment]

A first exemplary embodiment will be described in detail with reference to the drawings.

Fig. 2 illustrates a configuration of a communication system according to the present exemplary embodiment.

The communication system illustrated in Fig. 2 realizes a thin client system by using a cloud network 300 and a mobile network 400. A server apparatus 10 is arranged in the cloud network 300. In addition, the mobile network 400 connected to the cloud network 300 includes a packet forwarding apparatus 20, a radio network controller (RNC) 30, and a base station 40.

In Fig. 2, an SGSN/GGSN apparatus is used as the packet forwarding apparatus 20. The SGSN/GGSN apparatus is an apparatus in which an SGSN (Serving GPRS Support Node) apparatus and a GGSN (Gateway GPRS Support Node) apparatus are integrated.

In the communication system illustrated in Fig. 2, an end user connects a mobile terminal 50 to a virtual client on the server apparatus 10 arranged in the cloud network 300. The end user operates the virtual client on the server apparatus 10 as if the end user operated an actual terminal. To realize such thin client system, the mobile terminal 50 transmits an operation signal to the server apparatus 10. The operation signal reaches the server apparatus 10 via the base station 40, the RNC 30, and the packet forwarding apparatus 20 in the mobile network 400.

The operation signal is a signal transmitted to the server apparatus 10 when a user performs a key operation on the mobile terminal 50 or various operations on a screen such as touching buttons, entering characters, and scrolling information. The operation signal transmitted from the mobile terminal 50 reaches the server apparatus 10 in the cloud network 300 via various apparatuses in the mobile network 400.

Examples of the protocol used for transmitting the operation signal include TCP/IP (Transmission Control Protocol/Internet Protocol) and HTTP (Hyper Text Transfer Protocol) which is an upper layer of TCP/IP. The protocol used for transmitting the operation signal is not limited. For example, SIP (Session Initiation Protocol) may be used.

The packet forwarding apparatus 20 performs tunneling on a packet transmitted from the server apparatus 10 by using the GTP-U (GPRS Tunneling Protocol for User Plane) protocol and forwards the packet to the RNC 30.

The RNC 30 wirelessly transmits the packet, which is forwarded from the packet forwarding apparatus 20, to the mobile terminal 50 via the base station 40.

The mobile terminal 50 receives the packet transmitted from the server apparatus 10 via the mobile network 400. The mobile terminal 50 extracts data stored in the packet and displays a screen on the basis of the extracted data. The data stored in the packet is a compressed-and-encoded bit stream in which an image signal displayed by the mobile terminal 50 is compressed.

The mobile terminal 50 includes a decoder corresponding to an image encoder (an image encoder unit 240 which will be described below) included in the server apparatus 10. The mobile terminal 50 uses this decoder to decode the compressed-and-encoded bit stream extracted from the received packet and displays the decoded screen on a display unit (for example, a liquid crystal panel) of the mobile terminal 50. If voice is associated with the screen information generated by the server apparatus 10, the mobile terminal 50 uses a corresponding decoder to reproduce the voice, as in the case of the image signal.

Next, the server apparatus 10 will be described in detail.

Fig. 3 illustrates an internal configuration of the server apparatus 10.

The server apparatus 10 includes an operation signal packet reception unit 200, a virtual client unit 210, a screen capture unit 220, a band estimate calculation unit 230, an image encoder unit 240, an audio encoder unit 250, a first packet transmission and reception unit 260, a second packet transmission and reception unit 270, and a third packet transmission and reception unit 280. For simplicity, Fig. 3 illustrates only the modules relating to the server apparatus 10 according to the present exemplary embodiment.

The operation signal packet reception unit 200 receives a TCP/IP packet, which includes an operation signal from the mobile terminal 50, via various apparatuses included in the mobile network 400. The operation signal packet reception unit 200 extracts the operation signal from the received TCP/IP packet and outputs the signal to the virtual client unit 210.

The virtual client unit 210 realizes various services provided by the server apparatus 10. More specifically, the virtual client unit 210 includes a CPU (Central Processing Unit), a hard disk, a cache memory, and a voice/still image/moving image decoder. The virtual client unit 210 provides various services by running application software that uses these hardware modules. It is preferable that the application software be updated easily from the outside of the server apparatus 10.

The virtual client unit 210 analyzes the operation signal received from the operation signal packet reception unit 200. The virtual client unit 210 starts appropriate application software on the basis of the analysis result and generates necessary screen information with a predetermined screen resolution so that the started application software is displayed on the screen of the mobile terminal 50. The virtual client unit 210 outputs the generated screen information to the screen capture unit 220.

The screen capture unit 220 captures an RGB signal outputted from the virtual client unit 210 with a predetermined screen resolution and frame rate. In addition, the screen capture unit 220 converts the RGB signal into a luminance signal (Y) and a color-difference signal (Cb, Cr) and outputs the signals to the image encoder unit 240. The screen capture unit 220 can use an arbitrary method to convert the RGB signal into a luminance signal (Y) and a color-difference signal (Cb, Cr). Instead of converting the RGB signal into a luminance signal and a color-difference signal, the screen capture unit 220 may convert the RGB signal into another signal format, for example, into a YUV signal. If the virtual client unit 210 generates image information that is associated with voice (audio signal), the screen capture unit 220 also reads this associated audio signal and outputs the read audio signal to the audio encoder unit 250.

The band estimate calculation unit 230 and the image encoder unit 240 will be described below.

The audio encoder unit 250 receives the audio signal and compresses and encodes the received audio signal on the basis of a predetermined method to generate a compressed-and-encoded bit stream. The generated compressed-and-encoded bit stream is outputted to the second packet transmission and reception unit 270.

Examples of the method for compressing and encoding the audio signal include MPEG-4 AAC (MPEG-4 Advanced Audio Coding) and Enhanced AAC. While the following description will be made assuming that the server apparatus 10 uses MPEG-4 AAC, the method for compressing and encoding the audio signal is not limited to MPEG-4 AAC.

The first packet transmission and reception unit 260 receives a compressed-and-encoded bit stream from the image encoder unit 240. In addition, the first packet transmission and reception unit 260 stores the compressed-and-encoded bit stream in a packet payload, establishes a packet of a predetermined protocol, and transmits the packet to the packet forwarding apparatus 20. Examples of the predetermined protocol include RTP/UDP/IP (Real-time Transport Protocol/User Datagram Protocol/Internet Protocol), UDP/IP, and TCP/IP. While the following description will be made assuming that the first packet transmission and reception unit 260 uses UDP/IP, the protocol used is not limited to UDP/IP.

Another configuration is possible. For example, a file format such as MPEG-4 or 3GP may be used to temporarily store a compressed-and-encoded bit stream in a file and transmit this file in packets. In such case, TCP/IP can be used as the packet protocol.

The second packet transmission and reception unit 270 receives a compressed-and-encoded bit stream from the audio encoder unit 250, establishes a packet of UDP/IP, stores the compressed-and-encoded bit stream in a packet payload, and transmits the packet to the mobile terminal 50.

When instructed by the band estimate calculation unit 230 to transmit probe packets which will be described below, the third packet transmission and reception unit 280 transmits the probe packets to the mobile terminal 50.

Next, the band estimate calculation unit 230 will be described.

Fig. 4 illustrates an internal configuration of the band estimate calculation unit 230.

The band estimate calculation unit 230 includes a determination unit 231, a switch 232, and a band estimation unit 233.

The determination unit 231 receives a determination result from the image encoder unit 240 (from a difference determination unit 242 in the image encoder unit 240 which will be described below). On the basis of this determination result, the determination unit 231 changes input nodes of the switch 232. The determination result outputted from the image encoder unit 240 includes information representing whether encoding of screen information has not been performed for a predetermined time span or more.

If the received determination result represents that encoding of screen information has been performed within a predetermined time, the determination unit 231 instructs the switch 232 to output an output signal from the first packet transmission and reception unit 260 to the band estimation unit 233. If the received determination result represents that encoding of screen information has not been performed within the predetermined time, the determination unit 231 instructs the third packet transmission and reception unit 280 to consecutively transmit packets for estimating a band in the mobile network 400. In such case, the determination unit 231 instructs the switch 232 to output an output signal from the third packet transmission and reception unit 280 to the band estimation unit 233.

To estimate a band in the mobile network 400, the band estimation unit 233 selects and performs processing A or processing B described below. If the determination result outputted from the determination unit 231 represents that encoding has been performed within the predetermined time, the band estimation unit 233 performs the processing A described below. However, if the determination result outputted from the determination unit 231 represents that encoding has not been performed for the predetermined time span or more, the band estimation unit 233 performs the processing B described below.

Hereinafter, the processing A and the processing B will be described.

First, the processing A will be described.

[Processing A]

The band estimation unit 233 receives a signal outputted from the first packet transmission and reception unit 260 and calculates a band estimate W on the basis of the following expression (1).

$$W = \frac{D(i)}{R(i) - R(i-1)} \quad \cdots \ (1)$$

In expression (1), D(i) represents the data size of an i-th (hereinafter, i is an integer of 2 or more) packet transmitted from the first packet transmission and reception unit 260 to the mobile terminal 50. R(i) represents time when the mobile terminal 50 receives the i-th packet. R(i) is information that is acquired from a response packet transmitted from the mobile terminal 50 to the first packet transmission and reception unit 260.

Next, the band estimate W calculated by expression (1) is temporally smoothed on the basis of the following expression (2).

$$B(n) = (1 - \beta)B(n-1) + \beta W \quad \cdots \ (2)$$

B(n) represents a band estimate after the band estimate W is smoothed at an n-th time point (hereinafter, n is an integer of 1 or more). $\beta$ is a constant in the range of $0 < \beta < 1$.

Next, by using the band estimate B(n) smoothed on the basis of expression (2), per predetermined time, a bit rate C(n) for encoding an image signal is calculated on the basis of expressions (3) and (4). In addition, the band estimation unit 233 outputs the bit rate C(n) to the image encoder unit 240 at predetermined time.

$$C(n) = (1 - \gamma)C(n-1) + \gamma B(n) \quad \cdots \ (3)$$

$$C(n) \leq B(n) \quad \cdots \ (4)$$

C(n) is a bit rate at the n-th time point, and $\gamma$ is a constant in the range of $0 < \gamma < 1$.

Next, the processing B will be described.

The determination unit 231 consecutively transmits, as probe packets, certain packets for band estimation to the third packet transmission and reception unit 280 at a predetermined timing. Namely, instructed by the determination unit 231, the third packet transmission and reception unit 280 consecutively transmits M (M is an integer of 2 or more) or more probe packets to the mobile terminal 50. Each probe packet includes at least information about the data size of the probe packet and information about the transmission time of the probe packet from the server. The same protocol used by the first packet transmission and reception unit 260 is used for transmitting these probe packets. Namely, the server apparatus 10 according to the present exemplary embodiment uses UDP/IP.

The mobile terminal 50 receives the probe packets and transmits response packets in response to the respective probe packets. Each response packet transmitted from the mobile terminal 50 includes information about a data size, the time of the transmission by the server apparatus 10, and the time of the reception by the mobile terminal 50. The third packet transmission and reception unit 280 receives the response packets consecutively transmitted by the mobile terminal 50. From each of the received response packets, the third packet transmission and reception unit 280 extracts the information about a data size, the time of the transmission by the server apparatus 10, and the time of the reception by the mobile terminal 50. The third packet transmission and reception unit 280 outputs the extracted information to the band estimate calculation unit 230.

The band estimate calculation unit 230 receives the information about the data size of each response packet, the time of the corresponding transmission by the server apparatus 10, and the time of the corresponding reception by the mobile terminal 50. Next, the band estimation unit 233 performs the following processing B.

[Processing B]

The band estimation unit 233 arranges the response packets according to transmission time and calculates a band estimate W on the basis of the following expression (5) per predetermined time.

$$W = \frac{\sum_{i=2}^{M} D(i)}{R(M) - R(1)} \quad \cdots \quad (5)$$

In expression (5), D(i) represents the data size of an i-th packet transmitted from the third packet transmission and reception unit 280. R(M) represents time when the mobile terminal 50 receives an M-th packet transmitted. R(1) represents time when the mobile terminal 50 receives the first packet transmitted from the server apparatus 10.

Next, by applying expression (2), the band estimate calculation unit 230 temporally smoothes the calculated band estimate W. Next, by using the band estimate B(n) smoothed on the basis of expression (2), the band estimate calculation unit 230 calculates a bit rate C(n) for encoding an image on the basis of expression (3) per predetermined time. The calculated bit rate C(n) is outputted to the image encoder unit 240 per predetermined time.

Next, the image encoder unit 240 will be described.

Fig. 5 illustrates an internal configuration of the image encoder unit 240.

The image encoder unit 240 includes a buffer unit 241, a difference determination unit 242, a switch 243, an image encoding unit 244, and a rate control unit 245.

The buffer unit 241 receives an image signal from the screen capture unit 220 with a predetermined screen resolution and a predetermined frame rate and accumulates one frame of image signal. The buffer unit 241 accumulates one frame of signal (a luminance signal, a color-difference signal) converted by the screen capture unit 220 and outputs the accumulated image signal to the switch 243.

The difference determination unit 242 accumulates one frame of past image signal therein. In addition, the difference determination unit 242 receives the current frame of image signal from the buffer unit 241. The difference determination unit 242 uses the one frame of past image signal accumulated therein and the current frame of image signal to determine whether to encode the image signal.

More specifically, on the basis of the following expression (6), the difference determination unit 242 calculates the sum of absolute differences (SAD) between the received current frame of image signal and the one frame of past image signal.

$$D\_k = \sum_{x,y} \left| P\_k(x, y) - P\_k - 1(x, y) \right| \quad \cdots \quad (6)$$

In expression (6), D_k represents the SAD value of a k-th frame (hereinafter, k is an integer). P_k(x, y) represents coordinates of an image signal of the k-th frame.

In expression (6), the SAD value calculation range (the range in which calculation of $\sum$ is performed) may be a whole frame or may be limited to a partial area. In the former case, areas may be given different degrees of importance. In such case, to calculate the SAD values, a weight that is different per area can be multiplied by the SAD values.

Next, the difference determination unit 242 compares D_k with a predetermined threshold T_th to determine whether to encode the image signal. More specifically, if D_k is equal to or more than the threshold T_th, since change of the image signal is large (movement of the elements expressed by the image signal is large), the difference determination unit 242 determines that the image signal needs to be encoded. However, if D_k falls below the threshold T_th, since change of the image signal is small (the movement is small), the difference determination unit 242 determines that no encoding is needed.

The difference determination unit 242 outputs the determination result to the switch 243 and the band estimate calculation unit 230. On the basis of the determination result outputted by the difference determination unit 242, the determination unit 231 included in the band estimate calculation unit 230 determines whether encoding of an image signal has been performed within the predetermined time and a compressed-and-encoded bit stream has been transmitted to the mobile terminal 50.

On the basis of the determination result outputted by the difference determination unit 242, the switch 243 determines whether to output the one frame of image signal outputted from the buffer unit 241 to the image encoding unit 244. More specifically, if the determination result outputted by the difference determination unit 242 indicates encoding, the switch 243 outputs the one frame of image signal to the image encoding unit 244. However, if the determination result outputted by the difference determination unit 242 does not indicate encoding, the switch 243 does not output the one frame of image signal to the image encoding unit 244.

The rate control unit 245 receives a bit rate $C(n)$ for encoding an image from the band estimation unit 233 included in the band estimate calculation unit 230 per predetermined time. In addition, from a bit rate $C(n)$, the rate control unit 245 calculates a screen resolution VR and a frame rate fps for encoding an image. The rate control unit 245 outputs the bit rate $C(n)$, the screen resolution VR, and the frame rate fps to the image encoding unit 244.

The image encoding unit 244 receives a bit rate $C(n)$, a screen resolution VR, and a frame rate fps from the rate control unit 245 per predetermined timing. If the image encoding unit 244 receives one frame of image signal from the switch 243, the image encoding unit 244 uses a predetermined compression and encoding method and sets the maximum bit rate during compression and encoding to $C(n)$. By setting the maximum bit rate during compression and encoding to $C(n)$, the received image signal can be compressed within the band estimate. Next, the image encoding unit 244 outputs the generated compressed-and-encoded bit stream to the first packet transmission and reception unit 260. For example, H.264, MPEG-4, JPEG2000, or JPEG can be used as the predetermined compression and encoding method. However, the compression and encoding method is not limited to these methods.

If the image encoding unit 244 does not receives one frame of image signal from the switch 243, the image encoding unit 244 does not perform any compression and encoding processing. Thus, the image encoding unit 244 does not output any compressed-and-encoded bit stream to the first packet transmission and reception unit 260.

Next, an operation of the server apparatus 10 will be described with reference to a flowchart.

Fig. 6 is a flowchart illustrating an operation of the server apparatus 10.

The server apparatus 10 uses the virtual client unit 210 and generates screen information to be transmitted to the mobile terminal 50 (step S01). Next, the determination unit 231 of the band estimate calculation unit 230 determines whether an image has been encoded within a predetermined time (step S02). If an image has not been encoded within a predetermined time (No in step S02), there is a possibility that a band in the mobile network 400 may have changed within the predetermined time. Thus, the server apparatus 10 transmits probe packets to the mobile terminal 50 and acquires information necessary for estimating the band in the network (step S03). Namely, the fact that the image encoder unit 240 has not encoded an image signal for the predetermined time span or more means that no packet has been transmitted from the server apparatus 10 to the mobile terminal 50 for the predetermined time span.

In step S04, the band estimation unit 233 estimates the band in the mobile network 400 on the basis of the information acquired in step S03 or a response packet transmitted in response to the packets transmitted to the mobile terminal 50. Next, the band estimation unit 233 determines a bit rate used when the image encoder unit 240 encodes an image (step S05). A compressed-and-encoded bit stream generated by the image encoder unit 240 is transmitted to the mobile terminal 50 via the first packet transmission and reception unit 260 (step S06).

As described above, a mobile LTE/EPC network may be used as the mobile network 400 illustrated in Fig. 2. Alternatively, a WiMax (Worldwide Interoperability for Microwave Access) network or a WiFi (Wireless Fidelity) network can be used. Alternatively, a fixed network or an NGN (Next Generation Network) network can be used. In such cases, connection is made from a fixed terminal or a PC (Personal Computer), instead of from a mobile terminal.

While the server apparatus 10 is arranged in the cloud network 300 in Fig. 2, the server apparatus 10 may be arranged in the Internet. In addition, another configuration is possible. For example, if a thin client system server is arranged in an organization, the server apparatus 10 may be arranged in an intranet. In addition, another configuration is possible. For example, if a communication operator arranges a thin client system server, the communication operator can arrange the server apparatus 10 in any one of the mobile network 400, a fixed network, and an NGN network.

As described above, the image encoder unit 240 and the audio encoder unit 250 can use various compressing and encoding methods. In addition, the first packet transmission and reception unit 260, the second packet transmission and reception unit 270, and the third packet transmission and reception unit 280 can use various protocols.

The above network band estimation method performed by the band estimate calculation unit 230 is merely an example. Another method can be used to estimate a network band. In addition, in the above description, the band estimate calculation unit 230 gives an instruction about a bit rate to the image encoder unit 240. However, when calculating a bit rate from a band estimate, the band estimate calculation unit 230 may calculate not only a bit rate for encoding an image but also a bit rate for encoding voice. In such case, the band estimate calculation unit 230 makes adjustment so that the image encoder unit 240 and the audio encoder unit 250 control the respective bit rates.

As described above, in the communication system disclosed in Patent Literature 1, a receiving apparatus calculates statistical data such as one-way delay time, a packet loss ratio, and a reception ratio. Next, the receiving apparatus transmits the statistical data to a transmitting apparatus by means of an extended RTCP (Real-time Transport Control Protocol) packet for transmitting one-way delay. Thus, since a larger amount of data is transmitted in an uplink direction, the network band in the uplink direction may be compressed. In addition, Patent Literature 1 does not specifically disclose how the transmitting apparatus estimates a network band from the received statistical information. In addition, Patent Literature 1 does not specifically disclose how the transmitting apparatus determines an encoding rate from the delay time.

In contrast, in the communication system according to the present exemplary embodiment, the server apparatus 10 consecutively transmits certain packets (probe packets) to the mobile terminal 50 and estimates a network band on the basis of the information transmitted in response from the mobile terminal 50. Thus, the amount of processing performed by the mobile terminal 50 is not increased. In addition, since the mobile terminal 50 does not need to transmit a large size of statistical data, the band in the uplink direction is not compressed.

As described above, when a thin client system is established via a mobile packet network or an LTE/EPC network, the bit rates of compressed-and-encoded bit streams transmitted from the server apparatus 10 are controlled so as to follow temporal change of the network bandwidth. As a result, since accumulation or loss of packets is not caused in the network, for example, delay in updating of the screen on the mobile terminal 50 can be suppressed or disturbance on the screen can be suppressed. Namely, deterioration in QoE can be suppressed.

The disclosure of the above Patent Literature is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

[Reference Signs List]

| | |
|---|---|
| 10, 102 | server apparatus |
| 20 | packet forwarding apparatus |
| 30 | radio network controller |
| 40 | base station |
| 50 | mobile terminal |
| 100 | communication system |
| 101 | terminal apparatus |
| 103, 210 | virtual client unit |
| 104, 240 | image encoder unit |
| 105, 230 | band estimate calculation unit |
| 200 | operation signal packet reception unit |
| 220 | screen capture unit |
| 231 | determination unit |
| 232, 243 | switch |
| 233 | band estimation unit |
| 241 | buffer unit |
| 242 | difference determination unit |
| 244 | image encoding unit |
| 245 | rate control unit |
| 250 | audio encoder unit |
| 260 | first packet transmission and reception unit |
| 270 | second packet transmission and reception unit |
| 280 | third packet transmission and reception unit |
| 300 | cloud network |
| 400 | mobile network |

**Claims**

1.  A communication system, comprising:

    a terminal apparatus that includes a display unit; and
    a server apparatus that receives an operation of the terminal apparatus via a network and transmit screen information to be displayed on the display unit via the network;
    wherein the server apparatus comprises:

    a virtual client unit that performs processing on the basis of an operation of the terminal apparatus and generate the screen information;
    an image encoder unit that compresses the screen information on the basis of a predetermined method; and
    a band estimate calculation unit that calculates a band estimate, which is an estimate of a band in the network;
    wherein the band estimate calculation unit calculates a bit rate used when the image encoder unit compresses the screen information on the basis of the band estimate.

2.  The communication system according to claim 1;
    wherein the band estimate calculation unit calculates the band estimate on the basis of information transmitted from the terminal apparatus in response to the transmission of the screen information.

3.  The communication system according to claim 1 or 2;
    wherein, if the screen information has not been transmitted to the terminal apparatus for a predetermined time or more, the band estimate calculation unit calculates the band estimate on the basis of information transmitted from the terminal apparatus in response to information transmitted to the terminal apparatus.

4.  The communication system according to any one of claims 1 to 3;
    wherein the server apparatus further comprises a packet transmission and reception unit that consecutively transmits certain packets to the terminal apparatus on the basis of an instruction from the band estimate calculation unit and outputs packets transmitted from the terminal apparatus in response to the consecutively transmitted certain packets to the band estimate calculation unit.

5.  The communication system according to any one of claims 1 to 4;
    wherein the band estimate calculation unit calculates the band estimate on the basis of a size of a packet transmitted to the terminal apparatus and time at which the terminal apparatus receives the packet transmitted to the terminal apparatus.

6.  The communication system according to any one of claims 1 to 5;
    wherein the band estimate calculation unit sets the bit rate to be equal to or less than the band estimate.

7.  The communication system according to any one of claims 1 to 6;
    wherein the virtual client unit generates the screen information to which voice information is attached; and
    wherein the server apparatus comprises:

    a screen capture unit that separates the voice information from the screen information; and
    an audio encoder unit that compresses the voice information.

8.  A server apparatus, comprising:

    a virtual client unit that performs processing on the basis of an operation of a terminal apparatus connected via a network and generate screen information to be displayed by the terminal apparatus;
    an image encoder unit that compresses the screen information on the basis of a predetermined method; and
    a band estimate calculation unit that calculates an band estimate, which is an estimate of a band in the network; and
    wherein the band estimate calculation unit calculates a bit rate used when the image encoder unit compresses the screen information on the basis of the band estimate.

9.  A server apparatus control method, comprising:

a virtual client step of performing processing on the basis of an operation of a terminal apparatus connected via a network and generating screen information to be displayed by the terminal apparatus;
an image encoding step of compressing the screen information on the basis of a predetermined method;
a band estimate calculation step of calculating a band estimate, which is an estimate of a band in the network; and
a step of calculating a bit rate used when the screen information is compressed on the basis of the band estimate.

10. A program, causing a computer controlling a server apparatus to execute:

virtual client processing for performing processing on the basis of an operation of a terminal apparatus connected via a network and generating screen information to be displayed by the terminal apparatus;
image encoding processing for compressing the screen information on the basis of a predetermined method;
band estimate calculation processing for calculating a band estimate, which is an estimate of a band in the network; and
processing for calculating a bit rate used when the screen information is compressed on the basis of the band estimate.

# FIG.1

100; COMMUNICATION SYSTEM

102; SERVER APPARATUS

103 VIRTUAL CLIENT UNIT

104 IMAGE ENCODER UNIT

105 BAND ESTIMATE CALCULATION UNIT

NETWORK CONNECTION

101 TERMINAL APPARATUS

EP 2 882 164 A1

FIG.2

FIG.3

10; SERVER APPARATUS

VIRTUAL CLIENT UNIT  210

SCREEN CAPTURE UNIT  220

BAND ESTIMATE CALCULATION UNIT  230

OPERATION SIGNAL PACKET RECEPTION UNIT  200

IMAGE ENCODER UNIT  240

FIRST PACKET TRANSMISSION AND RECEPTION UNIT  260

AUDIO ENCODER UNIT  250

SECOND PACKET TRANSMISSION AND RECEPTION UNIT  270

THIRD PACKET TRANSMISSION AND RECEPTION UNIT  280

EP 2 882 164 A1

# FIG.4

230; BAND ESTIMATE CALCULATION UNIT

IMAGE ENCODER UNIT 240 →

231
DETERMINATION UNIT

233
BAND ESTIMATION UNIT

FIRST PACKET TRANSMISSION AND RECEPTION UNIT 260 →

THIRD PACKET TRANSMISSION AND RECEPTION UNIT 280 →

232

→ IMAGE ENCODER UNIT240

→ THIRD PACKET TRANSMISSION AND RECEPTION UNIT 280

FIG.5

240 ; IMAGE ENCODER UNIT

SCREEN CAPTURE
UNIT 220

BAND ESTIMATE
CALCULATION UNIT 230

241
BUFFER
UNIT

242
DIFFERENCE
DETERMINATION
UNIT

243

245
RATE
CONTROL
UNIT

244
IMAGE
ENCODING
UNIT

BAND ESTIMATE
CALCULATION UNIT 230

FIRST PACKET
TRANSMISSION AND
RECEPTION UNIT 260

EP 2 882 164 A1

# FIG.6

START

GENERATE SCREEN
INFORMATION — S01

HAS
IMAGE BEEN
ENCODED WITHIN
PREDETERMINED
TIME? — S02

N → CONSECUTIVELY TRANSMIT
PROBE PACKETS — S03

Y

ESTIMATE BAND IN
NETWORK — S04

DETERMINE BIT RATE — S05

TRANSMIT SCREEN
INFORMATION — S06

END

## INTERNATIONAL SEARCH REPORT

| International application No. |
|---|
| PCT/JP2013/071206 |

A. CLASSIFICATION OF SUBJECT MATTER
*H04L29/08*(2006.01)i, *H04L1/00*(2006.01)i

According to International Patent Classification (IPC) or to both national classification and IPC

B. FIELDS SEARCHED

Minimum documentation searched (classification system followed by classification symbols)
H04L29/08, H04L1/00

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho   1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-118881 A  (Fujitsu Ltd.),<br>21 June 2012 (21.06.2012),<br>paragraphs [0049], [0050], [0097]; fig. 2, 3<br>& US 2012/0144397 A1 | 1,7-10<br>2-6 |
| Y | JP 2012-501566 A  (SK Telecom Co., Ltd.),<br>19 January 2012 (19.01.2012),<br>paragraphs [0041] to [0043], [0047]<br>& US 2011/0007660 A1    & EP 2320580 A2<br>& WO 2010/024520 A2     & KR 10-2010-0024618 A<br>& CN 101978621 A | 2-6 |

☒ Further documents are listed in the continuation of Box C.    ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search<br>    10 October, 2013 (10.10.13) | Date of mailing of the international search report<br>    22 October, 2013 (22.10.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/071206

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2005/069558 A1 (NEC Corp.),<br>28 July 2005 (28.07.2005),<br>abstract<br>& US 2009/0190493 A1   & EP 1708429 A1<br>& WO 2005/069558 A1   & KR 10-2006-0122901 A<br>& CN 1910872 A | 1-10 |
| A | WO 2011/040006 A1 (Panasonic Corp.),<br>07 April 2011 (07.04.2011),<br>abstract; paragraphs [0051] to [0056]<br>& US 2011/0222431 A1   & WO 2011/040006 A1<br>& CN 102227894 A | 1-10 |

Form PCT/ISA/210 (continuation of second sheet) (July 2009)

**EP 2 882 164 A1**

**Patent documents cited in the description**

*   JP 2012173727 A